# EUROPEAN PATENT APPLICATION

(11) **EP 4 546 253 A1**
(43) Date of publication of application: **30.04.2025**
(21) Application number: 23205341.3
(22) Date of filing: 23.10.2023
(51) Int. Cl.: G06T 7/00

(54) **DETECTION OF DEFECTS ON SURFACES**

(71) Applicant: Data Spree GmbH, 10551 Berlin (DE)
(72) Inventor: HASS, Manuel, 10555 Berlin (DE); DÖRHEIT, Eric, 10715 Berlin (DE); BRIX, Leonard, 10243 Berlin (DE)
(74) Representative: Vossius & Partner Patentanwälte Rechtsanwälte mbB

(57) **Abstract**

System and method for defect determination, the method comprising: projecting a pattern on at least one surface of an object; obtaining image data of the projected pattern; providing the obtained image data to a machine learning model; obtaining an output from the machine learning model, wherein the output from the machine learning model comprises information relating to a location and classification of a pattern deviation in the projected pattern; and determining the presence or non-presence of a defect based on the output from the machine learning model.

## Description

The present disclosure relates to a method and system for the detection and/or determination of defects on surfaces. In particular, the present disclosure relates to the use of a machine-learning based method for a method and system for detection of defects on surfaces. The present disclosure is in the field of industrial image processing and/or machine vision.

Current methods for defect detection use conventional deflectometry to obtain surface features, that can be used to extract deviations on the surface, as well as a three-dimensional, 3D, shape measurement.

Light sources orfringe patterns and cameras are also used for this purpose. Current methods use rule-based algorithms for image evaluation. The rule-based algorithms have limitations regarding their differentiation capabilities between relevant and irrelevant deviations. This leads to an inability to examine objects of higher geometrical complexity and/or with unpredictable surface variations, where a baseline for comparison is often not available.

Furthermore, previous methods/systems may only be used to detect deviations on smooth surfaces.

Still further, when the surface features have a natural variance, this may lead to pattern deviations and may disable current methods and systems. For example, irregular paint and coating flow lines on surfaces or surface properties from previous production steps (e.g., injection molding points) may lead to pattern deviations, which are not related to defects and may lead to false positive detections.

Still further, current methods cannot distinguish visual deviations that do not have an impact on the surface regularity.

The only present solution is the use of humans to perform quality control based manual and/or visual inspection of surfaces. For certain niche areas and special applications, autocollimators may be used to test individual surfaces. However, this is not usually done automatically.

There have been attempts to use machine learning based algorithms to detect generically deviations (fringe patterns) in light patterns. However, the generic detection of deviations in, e.g., fringe patterns again exhibit technical problems. For example, this approach leads to false positive detections in, e.g., irregular paint and coating flow lines or in features such as injection molding dots.

In this disclosure, the term surface or surface of an object is used to describe a portion or portions of an outer surface of an object. Furthermore, a partial surface of an object is included in the term, in case only a portion of the object is imaged. Still further, the surface may also be a plurality of sub-surfaces of one object or a plurality of surfaces of a plurality of objects.

In this disclosure, the term defect refers to a flaw, imperfection, or anomaly in or on a surface of an object that deviates from the intended design, specifications, or expected quality standards. Specifically, defects may occur on surfaces of an object, such as inclusions, scratches, pimples, etc.

In this disclosure, the term deviation refers to a divergence or deviation from a standard or expected value.

In embodiments of this disclosure, a pattern may be projected onto a surface of an object. A projection of the pattern will be formed on the surface of the object. A defect on the surface of an object, as discussed above, may cause a deviation in the projected pattern also referred to as pattern deviation.

In embodiments of the present disclosure an image of the pattern projection on the surface is acquired.

The above discussed pattern deviations are visible in the acquired images, as deviations from the expected projected pattern image. One image of a pattern projection may contain one or more pattern deviation.

For detection of a surface defect, according to the present disclosure, each of said pattern deviations in one image may be classified as relevant pattern deviation or non-relevant pattern deviation. Alternatively, the entire image may be classified. Relevant pattern deviations are pattern deviations caused by defects as defined above. Non-relevant pattern deviations are related to normal surface features.

The invention is specified by the independent claims. Preferred embodiments are defined in the dependent claims. In the following description, although numerous features may be designated as optional, it is nevertheless acknowledged that all features comprised in the independent claims are not to be read as optional.

In an embodiment of the present disclosure, there is provided a method for defect determination, the method comprising: projecting a pattern on at least one surface of an object; obtaining image data of the projected pattern; providing the obtained image data to a machine learning model; obtaining an output from the machine learning model, wherein the output from the machine learning model comprises information relating to a location and classification of a pattern deviation in the projected pattern; and determining the presence or non-presence of a defect based on the output from the machine learning model.

In an embodiment of the present disclosure, in an initial training phase a first training dataset is provided to the machine learning model, wherein the first training dataset comprises a plurality of image data of a projected pattern and a corresponding annotation for each pattern deviation in the image data, and wherein the annotation comprises at least one information relating to a location and a classification of a pattern deviation.

In an embodiment of the present disclosure, the classification comprises relevant pattern deviation, which is related to the presence of a defect on the surface of the object.

In an embodiment of the present disclosure, the classification comprises non-relevant pattern deviation, which is related to a non-defect feature on the surface of the object.

In an embodiment of the present disclosure, the annotation is based on an input by a user for each image data; and/or wherein one or more of an object detection, a segmentation, or an anomaly detection machine learning model is used to locate and/or classify pattern deviations in the image data to generate at least part of the annotation for review by a user.

In an embodiment of the present disclosure, in a retraining phase, a second training dataset is provided to the machine learning model, wherein the first training dataset is enriched by obtained image data and corresponding annotation from a user.

In an embodiment of the present disclosure, one or more of an object detection, a segmentation, or an anomaly detection machine learning model used to locate and/or classify pattern deviations the image data to generate at least part of the annotation for review by a user.

In an embodiment of the present disclosure, the pattern is a fringe pattern, preferably comprising at least two pluralities of fringes with different orientations, more preferably with horizontal and vertical fringes forming a grid pattern; wherein the pattern optionally comprises swirls.

In an embodiment of the present disclosure, the machine learning model is configured as an object detection model and is configured to receive image data with a specified resolution as input and further configured to output a rank 3 tensor for each input image data.

In an embodiment of the present disclosure, a matrix component of the rank 3 tensor has a quarter of the input image data resolution in two dimensions, preferably height and width, and preferably at least five dimensions in depth; and wherein the at least five dimensions in depth represent the deviation determination.

In an embodiment of the present disclosure, one dimension corresponds to an object score, which has a value between 0 and 1 and that indicates a probability that a pattern deviation is nearby; and wherein the second to fifth dimensions encode the relative offset to a center location and the size in height and width of the pattern deviation; and wherein preferably any further dimensions encode a category information for predetermined subcategories.

In an embodiment of the present disclosure, there is provided a system for defect determination, comprising: an illumination unit configured to project a pattern on at least one surface of an object; an imagining unit configured to obtain image data of the pattern projection; and a processing unit configured to: provide the obtained image data to a machine learning model, obtain an output from the machine learning model, wherein the output from the machine learning model comprises information relating to a location and classification of a pattern deviation in the projected pattern, and determine the presence on non-presence of a defect based on the output of the machine learning model.

In an embodiment of the present disclosure, there is provided a data processing apparatus comprising means for carrying out the method of any one of the above embodiments.

In an embodiment of the present disclosure, there is provided a computer program comprising instructions which, when the program is executed by a computer, cause the computer to carry out the method of any one of the above embodiments.

In an embodiment of the present disclosure, there is provided a computer-readable medium comprising instructions which, when executed by a computer, cause the computer to carry out the method of any one of the above embodiments.

In an embodiment of the present disclosure, the technical principle of generating fringe patterns on surfaces is combined with an interpretation of said patterns using an artificial intelligence model.

In an embodiment of the present disclosure, a complex fringe pattern is used to improve the detection of defects and to use an artificial intelligence model trained to analyze complex fringe patterns.

In an embodiment of the present disclosure, the artificial intelligence is trained to detect and localize deviations and/or errors in the image data and to distinguish between relevant and irrelevant deviations.

Other aspects, features, and advantages will be apparent from the summary above, as well as from the description that follows, including the figures and the claims.

### Brief Description of the Drawings

The disclosure will be further described with reference to the figures. Therein,
- Fig. 1: shows different pattern deviations in a projected pattern according to an embodiment of the present disclosure,
- Fig. 2: shows detailed features of pattern deviations not related to a defect in a projected pattern according to an embodiment of the present disclosure,
- Fig. 3A: shows detailed features of pattern deviations related to a defect in a projected pattern according to an embodiment of the present disclosure,
- Fig. 3B: shows detailed features of pattern deviations related to a defect in a projected pattern according to an embodiment of the present disclosure,
- Fig. 3C: shows detailed features of pattern deviations related to a defect in a projected pattern according to an embodiment of prior art (top) and an embodiment of the present disclosure (bottom),
- Fig. 4: shows a system according to the prior art,
- Fig. 5: shows a system according to an embodiment of the present disclosure,
- Fig. 6: shows a block diagram of a method according to an embodiment of the present disclosure,
- Fig. 7: shows a block diagram of a method according to an embodiment of the present disclosure,
- Fig. 8: shows a block diagram of a method according to an embodiment of the present disclosure,
- Fig. 9A: shows a visualization of a defect detection according to an embodiment of the present disclosure;
- Fig. 9B: shows a visualization of a defect detection according to an embodiment of the present disclosure;
- Fig. 9C: shows a visualization of a defect detection according to an embodiment of the present disclosure;
- Fig. 9D: shows the input image from which the results of Fig. 9A, 9B, and 9C are inferred by a machine learning model according to the present disclosure.
- Fig. 10A to 10C: shows a comparison between pattern deviations in a pattern according to the present disclosure and prior art stripes for a spot defect.
- Fig. 11A to 11C: shows a comparison between pattern deviations in a pattern according to the present disclosure and prior art stripes for an inclusion defect.
- Fig. 12A: shows a graph that represents and compares the performance evolution with simple striped patterns and complex grid patterns according to embodiments of the present disclosure without pre-training, and
- Fig. 12B: shows a graph that represents and compares the performance evolution with simple striped patterns and complex grid patterns according to embodiments of the present disclosure with pre-training.

### Detailed Description

In an embodiment of the present disclosure, a pattern is projected on an object. The patten is preferably a complex pattern, more preferably a grid pattern. That is, the pattern preferably comprises two or more of a plurality of fringes with different general directions, most preferably horizontal and vertical fringes.

If the pattern would be projected onto a perfectly even and plane surface a perfect fringe pattern would occur. Depending on the angle between the surface and the projection plane, the distance between the fringes is changed. More complex surface features may also cause more complex deviations from the perfect pattern.

In an embodiment of the present disclosure, a machine learning model is used to detect and classify the pattern deviations in acquired images. Based on the detection and classification of the pattern deviations, the presence of surface defects is determined.

Machine Learning is a field of computer science that focuses on computer programs that enable computer systems to automatically learn from input data and produce output data, without being explicitly programmed. The output data may be used to form predictions or decisions based on said input data.

Machine learning is based on a computational model, a neural network is an example of such a computational model. In this disclosure, the computational model may also be referred to as machine learning model.

A machine learning model is characterized by a model architecture, parameters and hyperparameters. That is, in a specific model, parameters and hyperparameters are initialized and then subsequently updated in a training process.

In the present disclosure, a machine learning model is used to detect a deviation of a pattern projection in an input image of a pattern projection.

A model parameter, also referred to as parameter in the above, refers to a variable or weight that is learned by a machine learning model during a training process. These parameters are at the core of the model and define its ability to detect a deviation in an input image of a pattern projection.

Model parameters are adjusted iteratively during a training process to minimize the difference between the machine learning model's output and a ground truth in training data.

For the training process the machine learning model is provided with training data. The training data comprises a plurality of data sets also referred to as datapoints. In the present disclosure, a training data set comprises an image and annotation data with a ground truth.

The training process may be characterized by a difference between the output and the ground truth. For the training process the training data is typically divided into smaller subsets, or batches, to make the training process computationally efficient.

An epoch refers to a single pass through the entire training dataset during the training process of the machine learning model. During each epoch, the model processes and learns from data points in the training dataset.

A hyperparameter is a configuration setting that is not learned from the training data but is set priorto a training process. Hyperparameters are essential for controlling various aspects of the machine learning model and determining its overall behavior.

Hyperparameters play a crucial role in fine-tuning and optimizing the machine learning model's performance. Examples of hyperparameters include learning rates, batch sizes, the number of hidden layers in a neural network, and regularization strength.

Regularization strength refers to a hyperparameter that controls the degree to which regularization techniques are applied to the machine learning model during the training process. Regularization is a method used to prevent overfitting, which occurs when a model becomes too complex and fits the training data too closely, leading to poor generalization to unseen data.

Learning rate is a hyperparameter that determines the step size at which the machine learning model adjusts the parameters during the training process. It is a critical parameter for gradient-based optimization algorithms, such as stochastic gradient descent (SGD), which are commonly used to update a model's parameters and minimize its loss function based on the difference between the output and the ground truth.

Batch size refers to the number of data points processed in each iteration during the training process of the machine learning model.

In the present disclosure, pre-training, as further defined below, refers to the initial phase of a training process of a machine learning model on training dataset, wherein the training dataset comprises pre-existing data of the same type as the intended input. For example, in the present disclosure the training data may comprise pattern images on similar objects.

Re-training refers to the process of updating a pre-trained machine learning model with new training data for adapting it to changing conditions. This is done to ensure that the model continues to perform well and remains up-to-date as it encounters new examples or faces evolving circumstances.

In the context of evaluation of machine learning, precision is a performance metric that measures the accuracy of the machine learning model. It quantifies the ratio of true positive detections (correctly identified positive cases) to the total number of positive detections (true positives plus false positives).

Mean average precision, mAP, is a performance metric for machine learning models used primarily for evaluating the accuracy of object detection and information retrieval systems, especially in computer vision tasks. It quantifies the quality of ranked lists of items, such as detected objects in an image.

In the present disclosure, data annotation is the process of labeling a dataset, e.g., an image, with the corresponding ground truth. These annotations may include information such as object identification or image categorization and are used to train machine learning models.

In the present disclosure, inference or inference phase refers to the stage at which a trained machine learning model is executed, i.e., presented with input, to make detections, classifications, or decisions based on input data.

During inference, the machine learning model uses its previously learned parameters to process input data and produce output results. This is different from the training phase, where the machine learning model learns from a training data set.

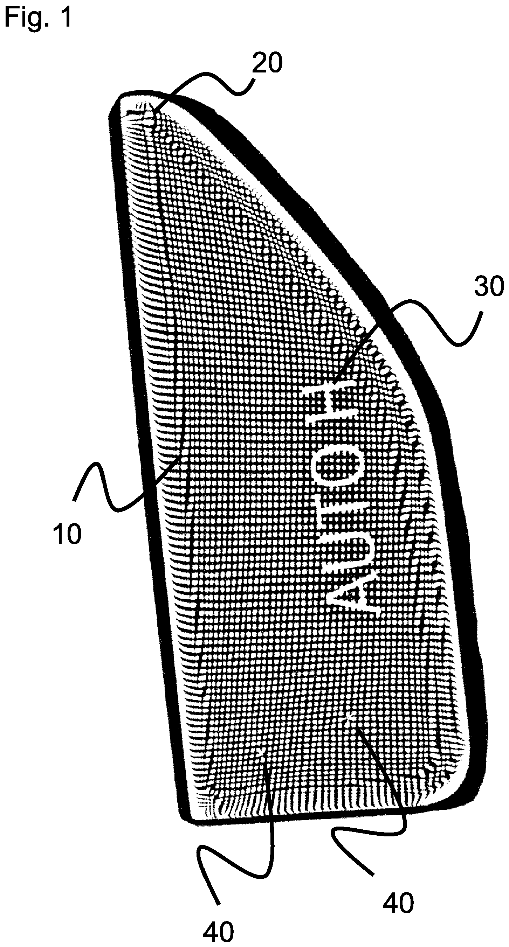

Fig. 1 shows different pattern deviations in a projected pattern according to an embodiment of the present disclosure.

Non-planar surfaces, e.g., edges of an object may cause a pattern irregularity or pattern deviation 10. Such a pattern deviation is not related to a defect but to a feature and thus acceptable.

Furthermore, a natural variance in the surface may cause a pattern deviation. For example, an injection molding point may cause a pattern deviation 20. Other natural variances may be irregular paint and/or coating flow lines on the surfaces or surface properties from previous production steps. Also said pattern deviations 20 are not related to a defect and thus acceptable.

Still further, lettering of the surface may cause a pattern deviation 30. Also said pattern deviation 30 is not related to a defect and thus acceptable.

However, a surface may also have a surface defect such as a spot, inclusion, scratch or other production defect. At such a defect also a pattern deviation 40 occurs. This pattern deviation 40 is related to a defect and therefore not acceptable.

As shown in Fig. 1 the appearance of a defect-related pattern deviation 40 is visually difficult to distinguish from a general non-defect-related pattern deviation 10, 20, 30. This prevents detection by a rule-based algorithm that would require to define pattern deviations by fixed variables such as size, geometry, or pixel arrangements, etc.

Thus, the applicants have realized that a rule-based differentiation and correct classification by a rule-based algorithm is not possible.

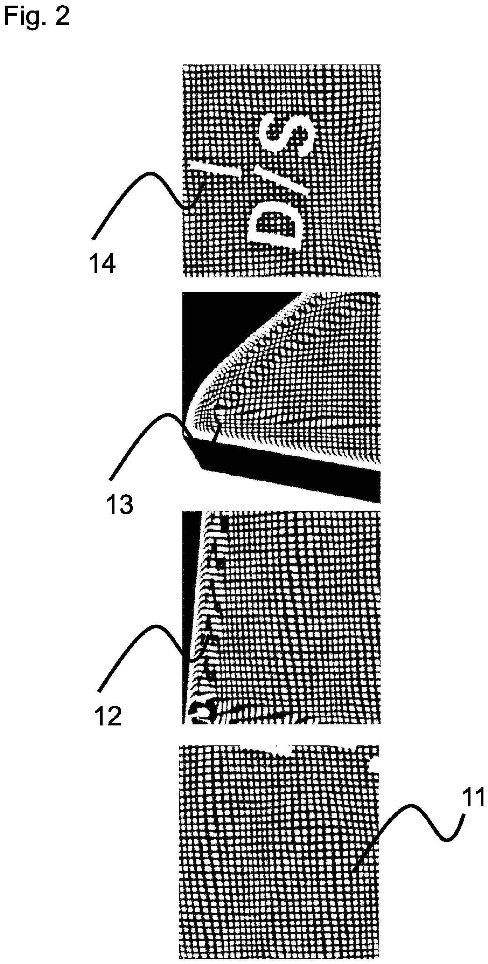

Fig. 2 shows detailed features of general pattern deviations not related to a defect in a projected pattern according to an embodiment of the present disclosure.

As discussed above, a general pattern deviation is a pattern deviation that is not indicative of a surface defect, but of a general surface feature. These features may be paint and coating flow lines 11, injection molding points 13, lettering surface structures 14, non-planar surface areas 12, and other production or product-specific characteristics.

Said general pattern deviations can vary individually from surface to surface, even forthe same objects or parts thereof or materials, e.g., flow lines of paints or coatings, may vary from object to object, but still do not relate to a surface defect. Therefore, for the detection of a defect such general deviations are not relevant.

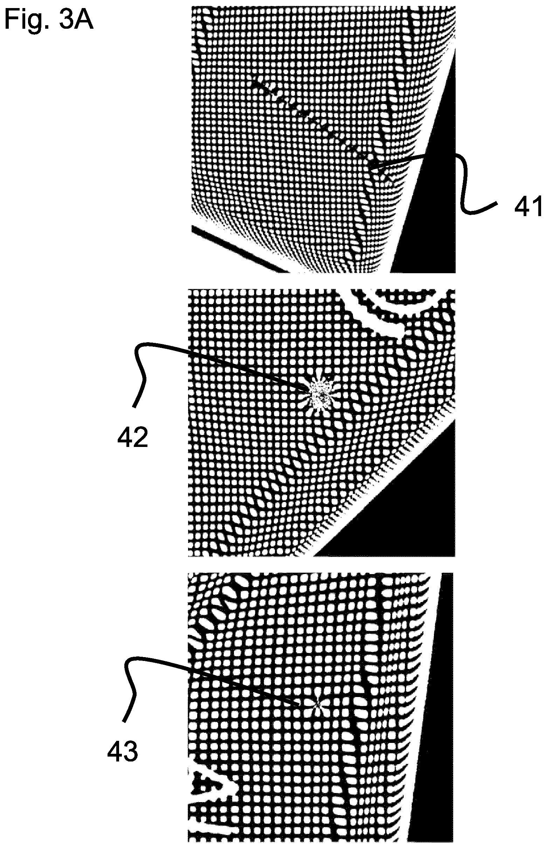

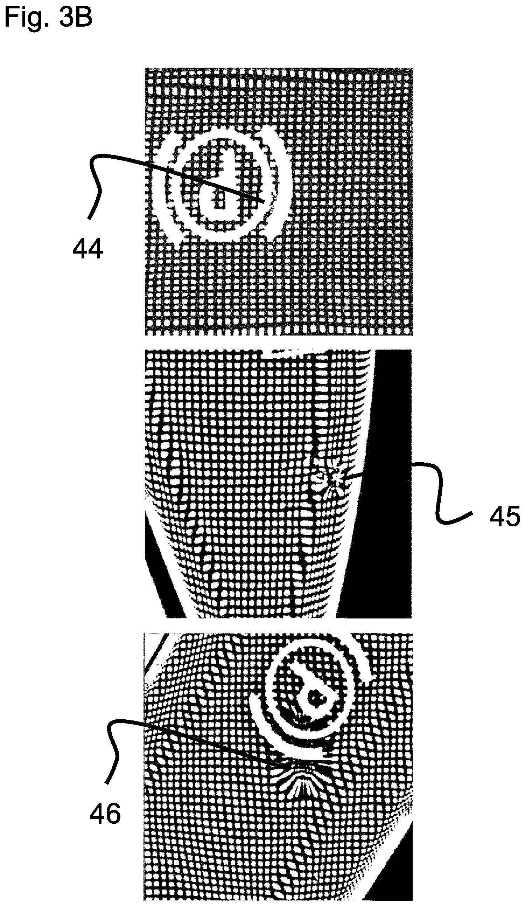

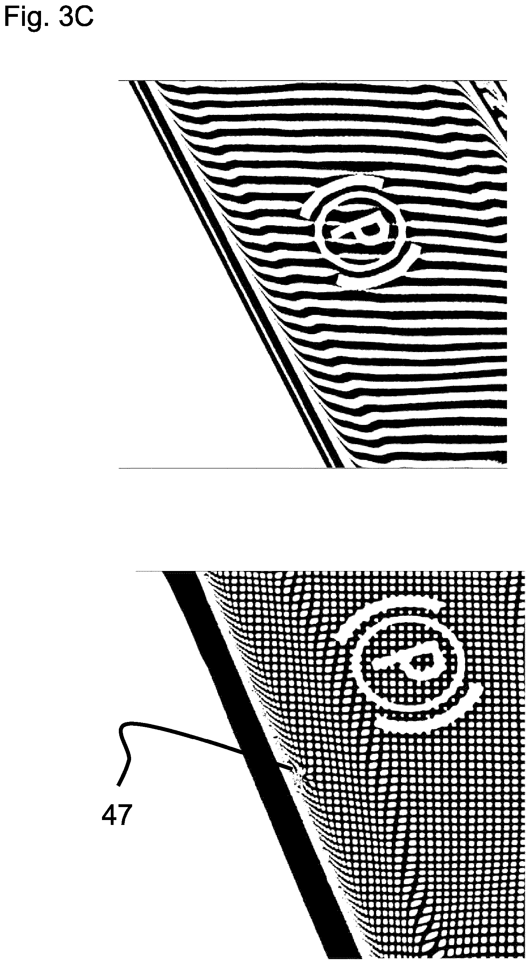

Fig. 3A shows detailed features of pattern deviations related to a defect in a projected pattern according to an embodiment of the present disclosure, Fig. 3B shows detailed features of pattern deviations related to a defect in a projected pattern according to an embodiment of the present disclosure, and Fig. 3C shows detailed features of pattern deviations related to a defect in a projected pattern according to an embodiment of the present disclosure.

A relevant pattern deviation is a deviation in the pattern caused by a surface defect, such as a spot, inclusion, scratch, or other production defect. These pattern deviations can occur in different shapes, sizes, number, and positions. In the area of the surface defect, the pattern may have a distorted or interrupted appearance.

Fig. 3A shows relevant deviations which may be easy for the human eye and brain to spot. A scratch on a planar surface may lead to an interruption of the pattern 41, which may at least roughly correspond to the shape of the scratch.

Also, an inclusion 42 and a spot 43 results in a relevant pattern deviation. Here, it is already harder for a human to distinguish between both types of deviations and also the shape of the deviation is only in theory deterministic, in practical cases, no rule can be formulated to classify such deviations.

Even for such simple pattern deviations, it is not possible to find a rule-based algorithm that would define pattern deviations by fixed variables such as size, geometry, or pixel arrangements, etc. Furthermore, due to the similar appearance, see Fig. 2, of relevant pattern deviations and general pattern deviations, a rule-based differentiation and correct classification by a rule-based algorithm is not possible.

Fig 3B, shows relevant deviations with general deviations. In practical applications surface defects are frequently collocated with otherfeatures which may lead to any one of the above general, i.e., not relevant, pattern deviations. In such cases a relevant pattern deviation needs to be identified within a non-relevant pattern deviation. Shown examples are an inclusion on lettering 44 and 46 and a spot on a non-planar surface 45.

Fig. 3C also shows a relevant deviation 47 within a general deviation, in particular, a pinhole defect on a non-planar surface. On the top a state-of the art fringe pattern is used and on the bottom a grid pattern projection according to an embodiment of the present disclosure is used. As will be discussed below, the classification is possible with the grid pattern according to the present disclosure, while no pattern deviation is observed using the fringe pattern and thus no classification would be possible.

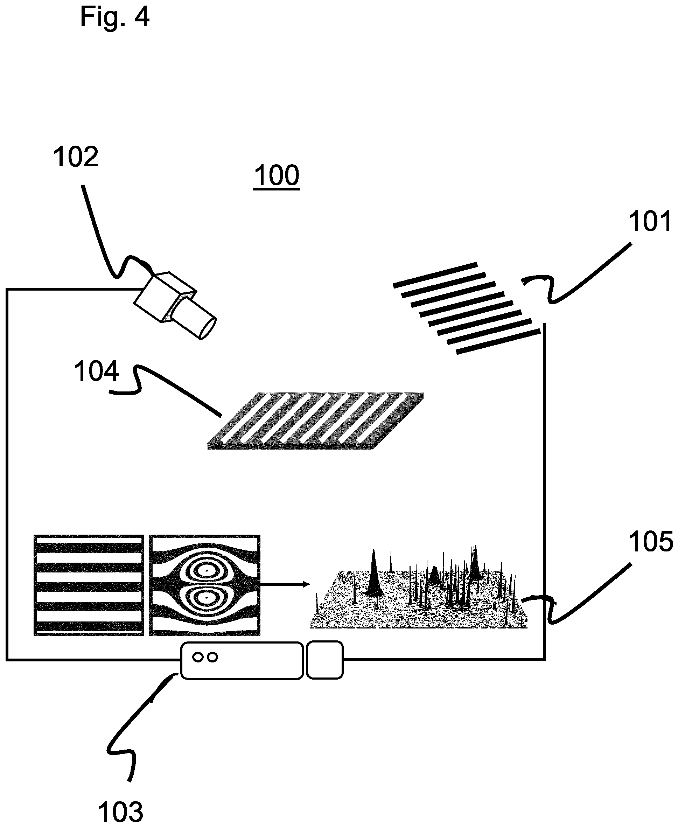

Fig. 4 shows a system according to the prior art. The system 100 comprises an illumination unit 101 and an imaging unit 102, each of which being functionally connected to a controller unit 103.

The illumination unit 101 is configured to illuminate an object and to project a fringe pattern 104 onto the surface of the object.

The imaging unit 102 is configured to capture images of the projected pattern on the object. The imaging unit 102 may be a camera, e.g., a 2D camera with a camera control unit. The imaging unit 102 may be functionally connected to the illumination unit 101 directly (not shown) or via the controller unit 103.

The imaging unit 103 may be synchronized with the illumination unit 101 and/or to a trigger signal. The illumination unit 101 may be synchronized with the imaging unit 102 and/orto a trigger signal.

The imaging unit 103 is configured to provide image data to the controller unit 103. The controller unit 103 is configured to control the imaging unit 102 and/or the illumination unit 101 and is further configured to execute image processing. The image processing 105 comprises rule-based algorithms for surface measuring and/or feature extraction.

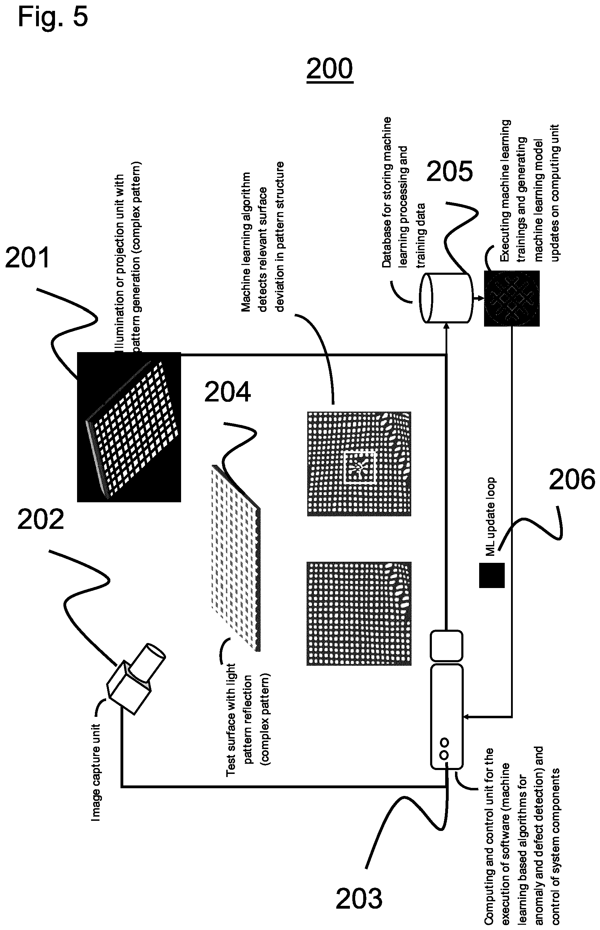

Fig. 5 shows a system according to an embodiment of the present disclosure. The system 200 according to an embodiment of the present disclosure differs from the system 100 in Fig. 4 in the pattern projection part and the image processing part.

The system 200 comprises an illumination unit 201 and an imaging unit 202, each of which being functionally connected to a controller unit 203. The system 200 further comprises a database 205 for storing data related to the training of the artificial intelligence model and is further configured to execute an update loop 206 forthe artificial intelligence model.

In detail, the illumination unit 203 is configured to project a (complex) fringe pattern 204 onto a surface of the object. The (complex) fringe pattern 204 preferably comprises at least two of a plurality of fringes with a different orientation, more preferably horizontal and vertical fringes, most preferably a grid pattern 204 or an orthogonal grid pattern.

When creating a pattern along surface reflections, a sufficient fringe density with the specific reflection pattern is preferable to enable irregular surface features to distort the reflection. If the distance between edges in the reflection grows larger than the irregular surface feature, fringes may become barely visible or not visible at all.

Therefore, it is preferred to increase the fringe density in the pattern as high as possible, which is usually limited by the camera resolution to avoid moiré effects.

Furthermore, in certain applications of the disclosure, the inspected surface might not be perfectly planar and create pattern deviation, due to, e.g., paint flow lines, which might be similar in appearance to pattern deviation of a small distortion, that is further away from an edge in the projected pattern.

Having a plurality of fringes in different orientations, that create complex patterns, provide more distinctive distortions along surface irregularities, as the edge density increases. These more distinctive distortions can also be better detected by machine learning models, as they display less ambiguity between regular flow lines and deviations.

This is demonstrated in Fig. 3C, in which the grid pattern shows a deviation, whereas no deviation can be observed for the linear fringe pattern, i.e., stripes.

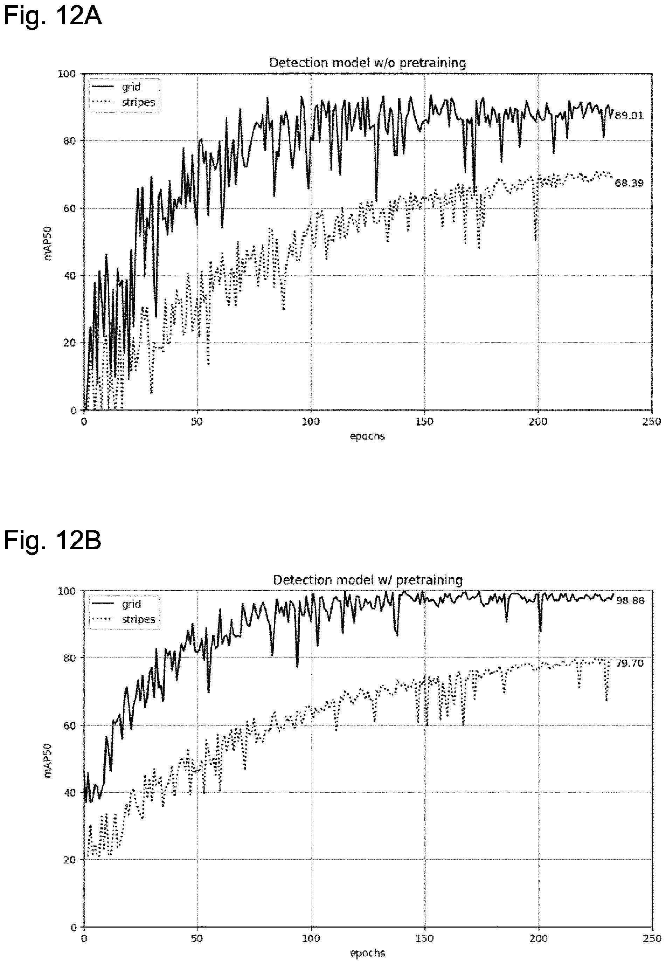

This can be shown empirically, when comparing the training of a deviation detection model on one-directional stripes and a two-directional grid pattern as shown in Figs. 12A and 12B, as discussed below.

Depending on the surface properties of the inspected subject, the pattern is generated either via an illumination unit 203, reflecting the pattern on specular surfaces, or via the projection of a pattern on matte surfaces. Still the present disclosure only refers to the illumination unit 203 although it may also be a projection device. A light projector is necessary if the surface is not reflective and thus the light pattern must be actively projected onto the surface.

That is, the illumination unit 203 can either be an area light with pattern printed on the outer surface, a bright screen, displaying the pattern or a projector projecting the pattern onto the object. The latter may be used when the surface of the object in question is non-reflective, while the former may be used for specular surfaces.

In a preferred embodiment, the fringe pattern 204 may be created either via an industrial light projector or via a printed lighting unit. The printed lighting unit can also be used in flash mode if more light is required. A screen displaying the pattern can also be used as a lighting unit.

The fringe pattern 204 may vary in granularity and general pattern according to the image capturing resolution and the size and type of the deviations to be detected. Specifically, the granularity of the grid pattern is chosen as small as possible, while being coarse enough to avoid moiré pattern.

In a preferred embodiment, the pattern is configured such that the deviation distorts the pattern on at least 2 or 3 pixels of the image, which does not mean the deviation itself needs to be as large. It is appreciated that the imaging resolution and pattern size can be adjusted accordingly to fulfill the aforementioned requirements, i.e., to obtain larger/smaller deviations.

Furthermore, in a preferred embodiment, specific distortions in the grid pattern are used to avoid alignment issues of the pattern with edges of the object. This refers to the alignment of vertically/horizontally projected lines with edges of objects. In this case, a deviation along the same direction as the edge might not distort the pattern any further than the edge itself would. Specific distortions in the pattern, preferably swirls, alleviate this rare issue.

In a preferred embodiment, the fringe pattern 204 has a complex structure, i.e., horizontal and vertical elements, in order to increase the visibility of possibly all irregularities of the surface.

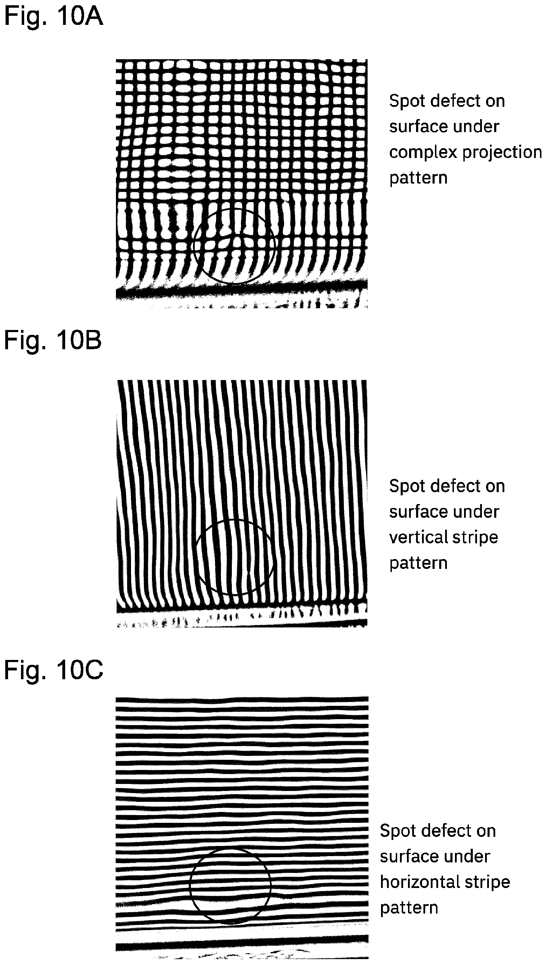

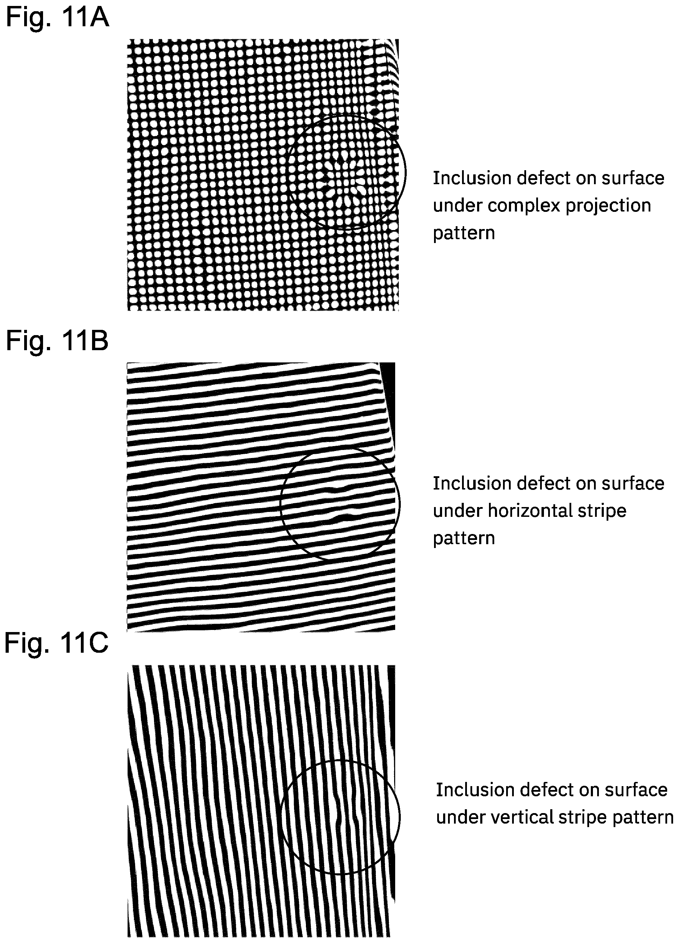

As discussed above, with reference to Fig. 3C, it is preferred that the illumination or projection pattern has a certain complexity in order to make certain deviations and irregularities on the surfaces visible. Examples for irregularities that may not be detected without a grid pattern are air inclusions below the surface, as shown in Fig.11B and Fig. 11C or small spots as shown in Fig. 10B and Fig. 10C.

The applicants have realized that an automatic, computer-based interpretation of the above discussed complex surface and/or complex fringe pattern is particularly suitable for analysis by a machine learning model according to the present disclosure.

For example, due to the neural layers a machine learning model, preferably a neural network model, can handle complex pattern structures and distinguish relevant from non-relevant pattern deviations, even if they appear to be similar.

The projection and/or illumination of a complex pattern, in contrast to a striped pattern, in combination with the machine learning model of the present disclosure allows to detect defects on the surface, which cause pattern deviation, that would be difficult to spot by even a human.

For example, the machine learning model-based system is able to distinguish actual surface defects from surface features that can appear optically like surface defects.

In addition, compared to most deflectometry systems, the complex pattern does not have to be moved sequentially. Furthermore, contrary to deflectometry systems, only a single image needs to be captured and processed to analyze a single field of view from the imaging device.

The imaging unit 202 is configured to capture the object of interest with an imaging device generating the input image data to the machine learning model of the image processing pipeline. Depending on the application, a single image or a plurality of images are acquired for further processing. In preferred embodiments, the imaging unit 202 may have camera hardware specifications like resolution, framerate, sensor, and lens parameters.

### Inference phase

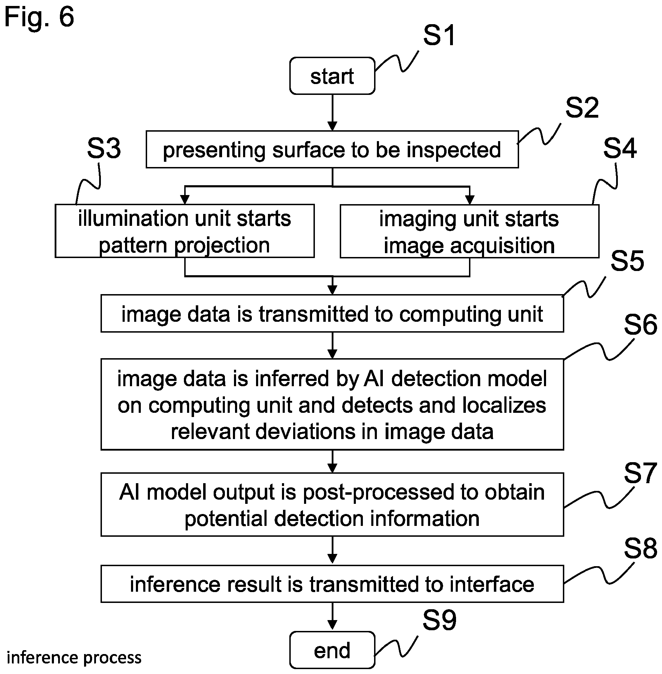

Fig. 6 shows a block diagram of an inference process in the method according to an embodiment of the present disclosure.

In detail, in step S1 the method is started, and the object is placed in step S2 such that the pattern can be projected onto the surface of interest and such that the surface of interest can be imaged by the imaging unit 202. To this end the position and/or orientation of the object and/or the illumination unit 201 and/or the imaging unit 202 may be adapted.

In step S3 the illumination unit 201 starts the pattern projection. Simultaneously and/or subsequently the imaging unit 202 starts image acquisition in step S4. In an embodiment, the illumination unit 201 is operated in a flash mode. This may require that the steps S3 and S4 are synchronized and/or triggered together.

In step S5 the acquired image data is provided to the processing unit 203 (computing unit). The image data may be pre-processed prior to step S5, e.g., the image data may be compressed and/or chopped or the like.

In step S6 the image data is presented to the machine learning model for inference. That is, the machine learning model is configured to receive the image data as input and is configured to detect and localize relevant pattern deviations in the input image data.

Then in step S7 the inferred data, i.e., the detected and localized pattern deviations, from the machine learning model are post-processed, to obtain potentially present deviation information, i.e., category, location and dimensions.

In an embodiment of the present disclosure, the artificial intelligence model is configured as an object detection model. That is, it is configured to receive one or more images with a specified resolution as input and further configured to output a rank 3 tensor for each input image.

The matrix component of said tensor has a quarter of the input image resolution in two dimensions (height, width) and five dimensions in depth. For every four pixels in the input image, one corresponding pixel exists in the output matrix.

The five depth dimensions represent the deviation detection, with one dimension corresponding to the object score, a value between 0 and 1 that indicates a probability that a relevant deviation is nearby. This means that there is a defect at the location corresponding to the pixel itself or neighboring pixels.

The object score output can be visually interpreted as a heatmap, indicating the presence of a deviation. The second to fifth dimension encode the relative offset to the center location and the size in height and width of the potential deviation. All units, regarding size and position, are in pixels.

In a further embodiment, the machine learning model is configured to categorize different types of deviations. To this end the five depth dimensions of the matrix component may be extended to four + N, where N is the number of deviation types, i.e., classification (category) types. In that case, the N dimensions encode the object score for each of the N deviation types separately. For each pixel location, the highest score indicates the type of the potential deviation.

In step S7, the output of the machine learning model is post-processed to obtain a human readable description of the detected pattern deviations in the form of a bounding box containing one or more of:
- id - upcounting ID for each box in the image(s)
- class - one of the predefined category labels
- center - cartesian x/y coordinates, where the center of the box is located in the image
- dimensions - width and height parameter of the box
- rotation - the rotation angle of the box around its center point

Said post-processing is configured to receive, as input, the raw output tensors of the machine learning model and decode every pixel location, where the object score exceeds an empirically validated threshold, which is preferably in the range of 0.2 to 0.9, and outputs a list of meta data containing the above mentioned bounding boxes.

Then, the resulting bounding boxes are filtered out, if the Jaccard-index of another overlapping bounding box with a higher object score is higher than an empirically validated threshold, preferably in the range of 0.1 to 0.5.

In step S8 the inference result and/or the result of the post-processing is output, preferably the inference result and/or the result of the post-processing is output to an interface, preferably to a programming interface and/or a human readable interface.

It is noted that the interface may be chosen based on the application requirements. There is no specific restriction. Commonly a JSON-like format is used, but when interfacing with a different system this may become an all-custom interface.

In other words, in a preferred embodiment, there is a postprocessing step, S7, which filters the raw machine learning model output to obtain better results, however, in a general embodiment the machine learning may output the information directly.

It is also noted that in embodiments of the present disclosure, there is no rule-based image processing algorithm used, e.g., no "regular" blob detection used on the heatmap output.

After step S8 the method is ended S9 or restarted with step S1.

For the determination of the presence of a surface defect, the detection of a relevant pattern deviation is used. The detection of a defect on a surface is performed differently, depending on the embodiment:
In a first embodiment, the defect(s) is/are directly detected in the image and indicated via a heatmap and/or a bounding box, but not further classified into subcategories.

In a second embodiment, the defect(s) is/are directly detected in the image and simultaneously classified into predetermined subcategories and indicated via a heatmap and/or a bounding box.

In a third embodiment each pixel of an image is classified into predetermined subcategories or OK.

In a fourth embodiment, also each pixel is classified into OK/NOK, but not further into subcategories.

In a fifth embodiment, the whole picture is classified into OK/NOK, depending on whether or not a deviation has been detected, but not further into subcategories.

In a sixth embodiment, the whole picture is classified into predetermined subcategories or OK, depending on whether or not a deviation has been detected.

### Initial Training/ Pre-Training

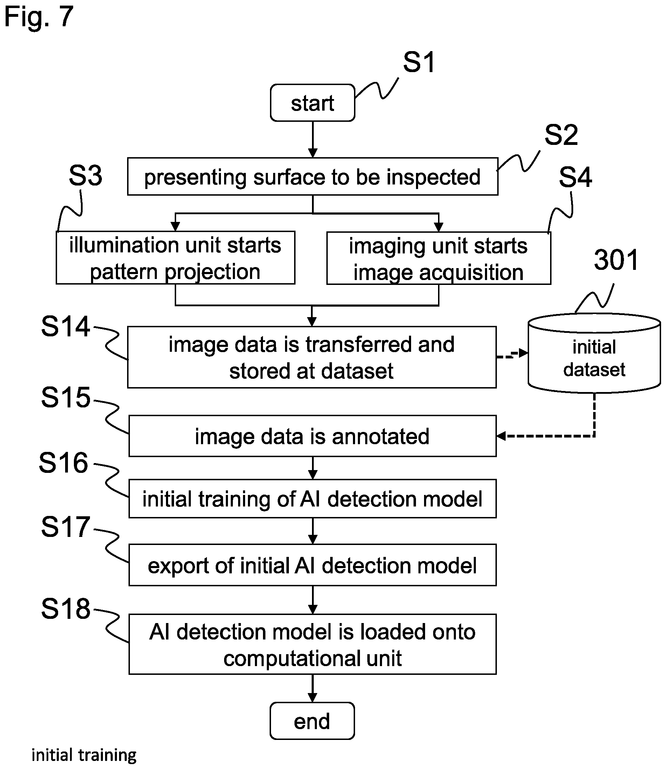

Fig. 7 shows a block diagram of an initial training, also referred to as pre-training, process in the method according to an embodiment of the present disclosure.

In an embodiment of the present disclosure, forthe initial training of the machine learning model, image data is acquired as previously described with regard to steps S1, S2, S3, and S4.

In step S14, the image data is transferred and stored as an initial training data set 301 in a database.

Optionally, the training data may be received from a plurality of datasets. A datapoint in a dataset contains the image data and corresponding metadata and annotations. That is an exemplary datapoint is comprised of, but not limited to, one or more of:
- id - randomly generated unique ID
- dataset_id - ID of the dataset the datapoint belongs to
- name - the filename of the image
- status - a status, whether the datapoint was already annotated or reviewed
- creation_date - a timestamp
- updated_date - a timestamp
- data_type - the format of the image (e.g. PNG, JPEG, TIFF etc.)
- data storage location - an URUfilepath to location from where the image data can be retrieved
- thumbnail - a low resolution image for preview purposes
- annotations - a category label (i.e. OK, NOK) and a list of bounding box annotations in the format:
   ∘ id - upcounting ID for each box in the image
   ∘ class - one of multipel predefined category labels
   ∘ center - cartesian x/y coordinates, where the center of the box is located in the image
   ∘ dimensions - width and height parameter of the box
   ∘ rotation - the rotation angle of the box around its center point
- data_subsets - a list of subset IDs the datapoint belongs to
- attributes - additional custom data
- change history - a history of changes to the datapoint

In step S15, the initial training data set is then provided for manually annotating of the image data in order to start the initial machine learning model training in step S16 on the basis of the annotated initial training data.

The manual annotation provides a ground truth to the image data, preferably meta data with the ground truth is provided to the image data. That is, each of the image data is provided with annotation meta data. The meta data comprises at least an image-level class tag and optionally comprises class tags for individual pixel and bounding boxes.

After the machine learning model training in step S16, the initial machine learning model is exported in step S17. The exported machine learning model may then be loaded onto one or more computational units for further use, in step S18.

Training data is stored in the database. The models are also saved to be retrieved at any time and are manually deployed to the target device.

### Re-Training

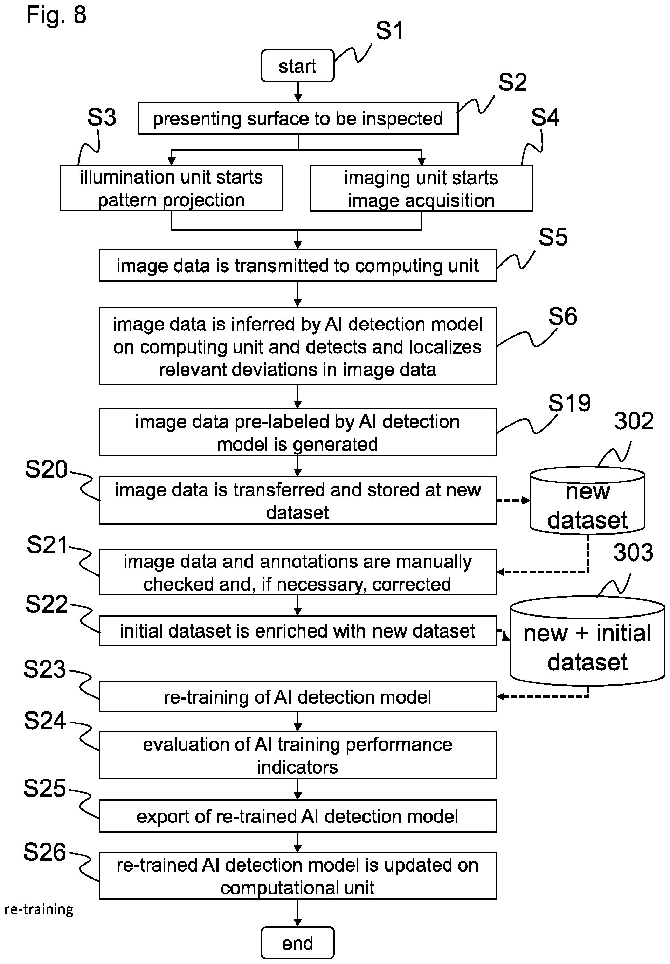

Fig. 8 shows a block diagram of a re-training process in the method according to an embodiment of the present disclosure.

For the re-training process, i.e., re-training an existing machine learning model, image data is acquired, transmitted to a computing unit, and inferred by the machine learning model, as previously described in process steps S1, S2, S3, S4, S5, and S6, see Fig.6.

This is followed, in step S19, by the generation of pre-annotated image data by inference with the machine learning model and the resulting output detections as discussed above. That is, the detected pattern deviations in the image data are already provided with markers and metadata by the machine learning model.

These pre-annotated image data is transferred to a new data set 302 and stored in step S20. Afterwards, in step 21, the pre-annotated image data is manually checked again, and if annotations were set incorrectly by the machine learning model, they are corrected in step 21.

Then, in step S22, the initial data set from step S14, c.f. the pre-training above, is enriched with the new data set from step S20 to obtain a larger training database for further training of the machine learning model.

That is, in addition to the initial training step S16, a new training with said extended database, also referred to as re-training, is started in step S23.

In step S24 during and after the training of the machine learning model, performance indicators of the training progress, such as Precision, Mean Average Precision and Recall are evaluated to check, if the performance of the machine learning model meets the performance requirements.

The retrained machine learning model may then be exported in step S25 and the version of the machine learning model on the computing unit may be updated in step S26.

In other words, re-training, also referred to as fine-tuning, is basically the same process as an initial training, but with newly added training data. Iterations, hyperparameter and other settings may vary as in every machine learning model training. In embodiments of the present disclosure, said parameters of the learning may be chosen based on hardware requirements (network architecture, resolution, etc.) and the amount of available training data.

Performing said machine learning update loops enables long-term continuous optimization of the quality and flexible reaction to process changes.

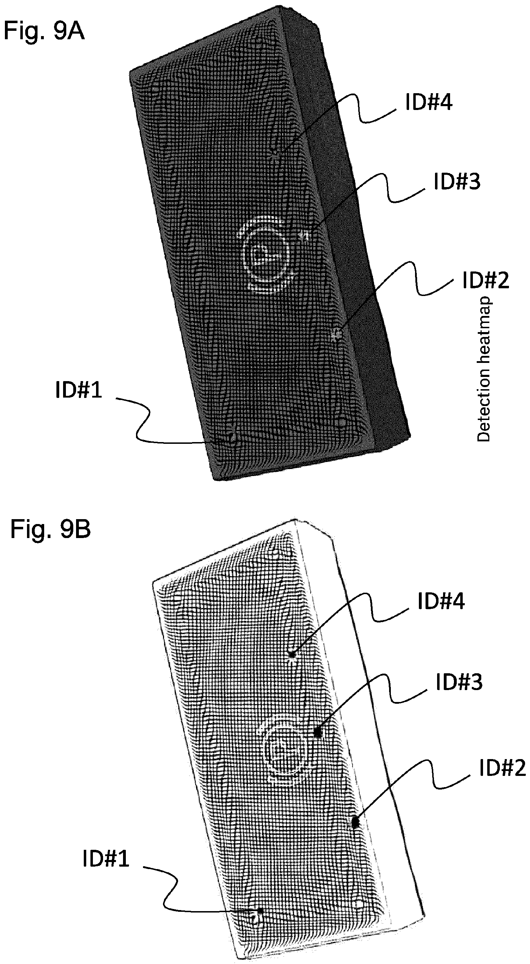

Fig. 9A shows a visualization of a defect detection according to an embodiment of the present disclosure. In detail, the inference output is shown. The inference output is shown on a grayscale, but preferably a heatmap is used with a color scale from, e.g., blue (dark) to red (bright).

Fig. 9B shows a visualization of a defect detection according to an embodiment of the present disclosure. Fig. 9B corresponds to Fig. 9A, however a color scale from black to white is used.

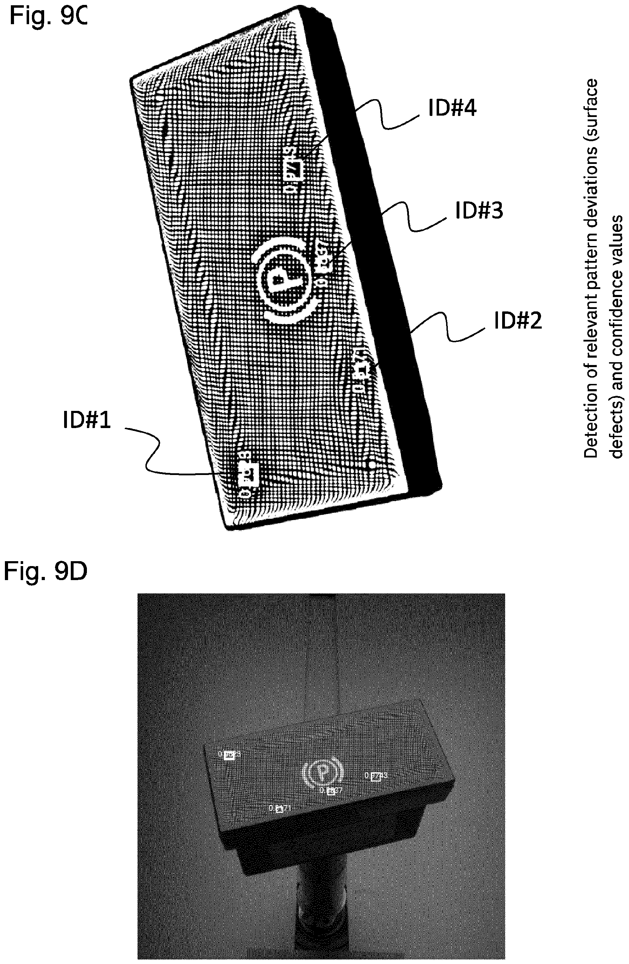

Fig. 9C shows a visualization of a defect detection according to an embodiment of the present disclosure. In detail, the inference output is shown. The inference output is shown in form of bounding boxes and confidence values for each bounding box 1, 2, 3, and 4. The ID of each bounding box corresponds to the reference numeral.

Fig. 9D shows the original input image from which the results of Fig. 9A, 9B, and 9C are inferred by a machine learning model according to the present disclosure. In the drawings the detections are enumerated with their respective ID# as listed below.

The inference results shown in Fig. 9C are:

| Detection ID# | Confidence Value | Detection Position x coordinate [px] | Detection Position y coordinate [px] | Detection Width [px] | Detection Height [px] |
|---|---|---|---|---|---|
| 1 | 0,9623 | 710 | 894 | 59 | 43 |
| 2 | 0,8171 | 984 | 1205 | 24 | 36 |
| 3 | 0,8837 | 1274 | 1110 | 22 | 28 |
| 4 | 0,9743 | 1525 | 1038 | 50 | 44 |

In embodiments of the present disclosure, to determine whether a defect is detected a threshold for the confidence vale is set. The threshold value his determined empirically for each application (training dataset or live data) to obtain a suitable value with regard to the application requirements, i.e., the false positive (FP) and false negative (FN) tradeoff. A higher threshold results in less FP but potentially more FN. A lower threshold results in less FN but potentially more FP.

In an embodiment the artificial intelligence model generates the output in form of heatmaps, indicating the deviation-probability from 0 to 100 percent and its locations and dimensions.

As detailed above, the main difference between the system 100 of the prior art and the system of the present disclosure 200 is the use of a grid pattern and the processing of the acquired image data using a machine learning model. This allows generically irregular surfaces to be checked for relevant pattern deviations and new surfaces to be learned.

It has been observed that good results without any re-training of the machine learning model are achieved. However, more robust models are obtained, when re-training on new training data was performed.

Therefore, the system 200 provides a flexible and teachable solution that can check surfaces in their entirety. That is, an object can be scanned/checked all around, even when there are edges and no-smooth surfaces, where previous approaches fail, e.g., cube with regular surfaces or a rubber duck with a complex shape.

In particular, previous solutions fail with irregular surfaces or are simply unable to detect certain types of defects, i.e., pattern deviations.

Fig. 10A to 10C shows a comparison between pattern deviations in a pattern according to the present disclosure and stripes for a spot defect. Fig. 11A to 11C shows a comparison between pattern deviations in a pattern according to the present disclosure and stripes for an inclusion defect. The pattern deviations can be clearly detected in the grid pattern according to the present disclosure. But the pattern deviation is less prominent and thus more likely to be missed by the machine learning model, when horizontal or vertical stripes are used. This is also empirically verified by the results in Fig. 12 A and 12B.

The machine learning approach may vary regarding the application requirements and availability of annotations (labeling of training data). Furthermore, different machine learning models may be suitable because the present disclosure, i.e., complex pattern in combination with machine learning model is suitable for variations, edge cases, and/or other irregularities.

In an embodiment of the present disclosure, a deep learning based machine learning model is used. This embodiment uses annotated images of objects with pattern deviations. Said machine learning model is preferably configured to output the center location and preferably the extent of the deviation in horizontal and vertical dimensions, i.e., a bounding box. Optionally, the machine learning model is configured to output a defect and/or deviation category if there are more than one.

The applicants have realized that a critical amount of training data, i.e., image data of defects and/or pattern deviation, to train a machine learning model, might be hard to come by. For example, it can either be infeasible to manually spot the deviations in the images, if the ratio between images containing deviations and deviation free images is very small; or is it not possible to capture a sufficient number of images in general.

Therefore, in an embodiment of the present disclosure, an initial machine learning model, that is trained on pre-existing datasets containing surface fringes, is initially deployed. Said initial machine learning model is configured to first detect potential deviations and second, to filter for images that are more likely to contain a deviation, which can then manually be annotated, as the ratio between images containing deviations and deviation free images is larger.

The initial model might not be able to detect most of the deviation in target applications right away, as shown in Fig. 12B at epoch 0, which indicates the performance of the initial model, as it was not trained on new data yet.

As new manually labeled data is added, a copy of the initial model is further trained on the newly labeled data, to refine the detection performance on a specific application.

During the beginning of the application, i.e., on a specific and/or new task and/or customer and/or part (object), this process is iterated over multiple times, until the performance metrics, namely precision, recall, and/or mAP, approach the desired level for the application.

Finally, the initial model is re-trained on all available data. Pre-training in this particular manner, not only enables an efficient relevant data generation process, but also shows performance gains over models, solely pre-trained on pre-existing data, as well as performance gains over models, that are only training on the newly generated data. This effect is shown in Figs. 12A and 12B, solid lines.

Fig. 12A and 12B also confirm, that the above disclosed effects are present for the use with stripe patterns (dotted lines), as well as in grid pattern (solid lines). However, in accordance with the present disclosure, the use of a grid pattern leads to a 20% better performance, regardless of the use of pre-training or not.

As described in the section above, a pre-trained model is used to filter out less relevant data, which are less likely to contain a deviation, and to increase the ratio of images containing deviations in the database.

Images in the database may be manually enriched with annotation metadata, precisely, the location, dimension, and category information for each deviation. As this process can be quite time consuming, e.g., for multiple thousand images, where each image can contain multiple deviations, the detected deviations by the initial model, or the further trained model respectively, are stored as annotations along with the additional meta data and the captured image in a datapoint of the training dataset in the database. Said datapoint may be the same datapoint as defined above.

This type of data is called pre-labeled data, as they already contain annotations, that were not verified by a human. A human annotator can then review the pre-labeled data. The review comprises deleting false positive detection, adding boxes around deviations missed by the model, and/or adjusting the dimensions of the pre-labeled boxes.

Especially when a multitude of deviations are contained in the image, this process provides a up to 10-fold speed-up in the annotation process.

In an embodiment the training data is generated either initially in a laboratory environment and/or from the data acquired during ongoing operation as described above.

Subsequently, the image data is annotated based on a user input into defect on surface, NOK, and no defect on surface, OK, if this has not already been done automatically by a pre-trained model (pre-labeling).

In addition, the deviation locations on the defective surface data are marked manually (data annotation). With each marking, the image coordinates, and dimensions (width, height, in pixels) of the marking are also saved to said dataset.

It is noted that a user interface may be provided for the user input in the annotation process.

In an embodiment, the image resolution is chosen based on the necessary granularity to visualize the smallest required deviation size and the runtime requirements in terms of processing speed and latency. At least 3 pixels per fringe may be used to reliably detect a deviation. Typical values for the image resolution range from 512 by 512 pixels to 1024 by 1024 pixels.

When higher resolutions are required, the originally captured image data is divided into overlapping patches. That is, camera may have a higher resolution than the input resolution to the machine learning model and the original camera image may either be down sampled or divided into patches before being provided to the machine learning model.

In a preferred embodiment, the hyperparameters are chosen in an empirical fashion on initial trainings, where the best performing set of hyperparameters is then selected for an extensive training schedule, which usually provides better results.

Examples of hyperparameters include, but are not limited to, one or more of: learning rates, batch sizes, the number of hidden layers in a neural network, and regularization strength, as well as input resolution.

To analyze the performance of the machine learning model, several metrics are calculated during and after the training, as well as in production (inference) phase, as the latter is the inherent goal of the training.

In an embodiment of the present disclosure, the training is monitored and evaluated according to the number of false positive, false negative and true positive detections, where the criteria for categorizing positive and negative detection is the pixel distance of the center of detected instances to actual (annotated) deviations or the overlap between annotated bounding boxes and the model prediction.

The center distance metric and overlap thresholds for matching a detection to annotated deviations is chosen application specific, and ranges between 0.1 and 0.9.

In general, all false positives, i.e., detections, that are not matched to an annotated pattern deviation, true positives, i.e. detections that are matched to an annotated pattern deviation and false negatives, i.e. non-detections of annotated pattern deviations, are counted to calculate the recall and precision of the machine learning model, as well as the mean average precision value for model comparison.

In an embodiment of the present disclosure, when there is no data annotated during production (inference) phase, images containing detections of potential pattern deviations are saved and provided for manual evaluation during maintenance intervals, to detect drifts in model precision.

For said evaluation, a set of captured and annotated images is used that is disjunct from the training dataset.

In an embodiment of the present disclosure, the trained machine learning model is exported in, preferably in a format that can be interpreted by neural network execution engines, together with meta-information from the training process, containing, but not limited to hyperparameter settings and training history of the model, as well as meta information like the mapping from output indices to class categories.

Besides the improved defect detection, the teach-in of new surfaces into the existing inspection system, i.e., the functional extension of the machine learning algorithm and pre-training of different surface data of the neural network is an advantage of the present disclosure.

Unlike other current surface inspection methods, the method described hereinabove requires only one image acquisition to inspect the surface. In one image acquisition with corresponding projection of a complex pattern, all defined defect types can be detected and localized. Other methods require several image acquisitions with, for example, a sequential stripe projection sequence.

The use of learning loops 206 as discussed above, provides the advantage to make surface inspection smarter and better for the user in the long term and improves sustainability. Here, for example, it is possible to react flexibly to production changes or to realize long-term quality goals (e.g., Six Sigma, CIP process, etc.).

Another advantageous feature of the present disclosure is to be able to display detected defect locations via an overlay on the captured image, see Fig. 9A to 9D and being able to display said locations on a screen and/or projecting them onto the object itself.

Said heatmap overlay / defect location highlighting enables an accelerated human-in-the-loop process, where a user can verify the correctness of the detection without searching the whole image or object for defects, but rather check the detected locations. This may speed up the process significantly, especially for small defects on larges surfaces.

It is a further advantage of the present disclosure that surfaces can be inspected for defects in production that previously could not be inspected at all or not in a sufficient manner with current methods. This results in strong cost advantages for the user, who can now save on manual inspections. In addition, the present disclosure ensures consistently higher inspection quality than manual inspection.

For a supplier or integrator, there is the advantage of being able to offer its customers a solution for automated quality control.

The evaluation of the generated images via machine learning based algorithms enables the detection of complex defect patterns, some of which are not detectable with the current state of the art.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure.

Such persons would understand, however, that the present disclosure is not restricted to the illustrated example architectures or configurations but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof.

The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according to embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. Method for defect determination, the method comprising:
projecting a pattern on at least one surface of an object;
obtaining image data of the projected pattern;
providing the obtained image data to a machine learning model;
obtaining an output from the machine learning model, wherein the output from the machine learning model comprises information relating to a location and classification of a pattern deviation in the projected pattern; and
determining the presence or non-presence of a defect based on the output from the machine learning model.

2. The method according to claim 1, wherein in an initial training phase a first training dataset is provided to the machine learning model,
wherein the first training dataset comprises a plurality of image data of a projected pattern and a corresponding annotation for each pattern deviation in the image data, and
wherein the annotation comprises at least one information relating to a location and a classification of a pattern deviation.

3. The method according to claim 2, wherein the classification comprises relevant pattern deviation, which is related to the presence of a defect on the surface of the object.

4. The method according to claim 2 or 3, wherein the classification comprises non-relevant pattern deviation, which is related to a non-defect feature on the surface of the object.

5. The method according to any one of claims 2 to 4,
wherein the annotation is based on an input by a user for each image data; and/or
wherein one or more of an object detection, a segmentation, or an anomaly detection machine learning model is used to locate and/or classify pattern deviations in the image data to generate at least part of the annotation for review by a user.

6. The method according to any one of claims 2 to 5, wherein, in a retraining phase, a second training dataset is provided to the machine learning model,
wherein the first training dataset is enriched by obtained image data and corresponding annotation from a user.

7. The method according to any one of claims 2 to 6, wherein one or more of an object detection, a segmentation, or an anomaly detection machine learning model used to locate and/or classify pattern deviations the image data to generate at least part of the annotation for review by a user.

8. The method according to any one of claims 1 to 7,
wherein the pattern is a fringe pattern, preferably comprising at least two pluralities of fringes with different orientations, more preferably with horizontal and vertical fringes forming a grid pattern;
wherein the pattern optionally comprises swirls.

9. The method according to any one of claims 1 to 8,
wherein the machine learning model is configured as an object detection model and is configured to receive image data with a specified resolution as input and further configured to output a rank 3 tensor for each input image data.

10. The method according to claim 9,
wherein a matrix component of the rank 3 tensor has a quarter of the input image data resolution in two dimensions, preferably height and width, and preferably at least five dimensions in depth; and
wherein the at least five dimensions in depth represent the deviation determination.

11. The method according to claim 10,
wherein one dimension corresponds to an object score, which has a value between 0 and 1 and that indicates a probability that a pattern deviation is nearby; and
wherein the second to fifth dimensions encode the relative offset to a center location and the size in height and width of the pattern deviation; and
wherein preferably any further dimensions encode a category information for predetermined subcategories.

12. System for defect determination, comprising:
an illumination unit configured to project a pattern on at least one surface of an object;
an imagining unit configured to obtain image data of the pattern projection; and
a processing unit configured to:
provide the obtained image data to a machine learning model,
obtain an output from the machine learning model, wherein the output from the machine learning model comprises information relating to a location and classification of a pattern deviation in the projected pattern, and
determine the presence on non-presence of a defect based on the output of the machine learning model.

13. A data processing apparatus comprising means for carrying out the method of any one of claims 1 to 11.

14. A computer program comprising instructions which, when the program is executed by a computer, cause the computer to carry out the method of any one of claims 1 to 11.

15. A computer-readable medium comprising instructions which, when executed by a computer, cause the computer to carry out the method of any one of claims 1 to 11.
